# FASCICULE DE BREVET EUROPEEN

(11) **EP 1 415 381 B1**
(45) Date de publication et mention de la délivrance du brevet: **14.11.2007**
(21) Numéro de dépôt: 02779601.0
(22) Date de dépôt: 31.07.2002
(51) Int. Cl.: H02K 5/26

(54) **MACHINE ELECTRIQUE TOURNANTE TELLE QU'UN ALTERNATEUR, ADAPTABLE A DIFFERENTS TYPES DE MOTEURS DE VEHICULE AUTOMOBILE**
ROTIERENDE ELEKTRISCHE MASCHINE, WIE EIN WECHSELSTROMGENERATOR, ANPASSBAR AN VERSCHIEDENE ARTEN VON KRAFTFAHRZEUGMOTOREN
ROTATING ELECTRICAL MACHINE SUCH AS AN ALTERNATOR ADAPTABLE TO DIFFERENT TYPES OF MOTOR VEHICLE ENGINES

(30) Priorité: 31.07.2001 FR 0110271
(43) Date de publication de la demande: 06.05.2004
(73) Titulaire: VALEO EQUIPEMENTS ELECTRIQUES MOTEUR, 94000 Créteil (FR)
(72) Inventeur: GAUTIER, Jean, F-49124 St Barthelemy D'Anjou (FR)
(86) Numéro de dépôt international: PCT/FR2002/002767
(87) Numéro de publication internationale: WO 2003/012960

(56) Documents cités:
- EP-A- 0 281 811
- WO-A-87/06401
- DE-U- 8 808 854
- FR-A- 1 056 643
- FR-A- 2 793 300

## Description

### Domaine technique de l'invention

L'invention concerne une machine électrique tournante telle qu'un alternateur, notamment pour véhicule automobile, adaptable à différents moteurs de véhicule automobile, du type comprenant un carter enfermant un stator et un rotor dont l'axe est supporté par des paliers avant et arrière et porte une poulie entraînée par l'intermédiaire d'une courroie et des pattes de fixation amovibles aptes à coopérer avec un support solidaire du moteur du véhicule, et qui sont susceptibles d'être montées sur la face périphérique d'au moins le palier avant, chacune entre deux faces d'appui prévues sur cette face périphérique à une distance prédéterminée l'une de l'autre dans la direction périphérique du palier.

### Etat de la technique

Des alternateurs de ce type sont déjà connus. Leur domaine d'application principal est le marché automobile de la pièce de rechange, c'est-à-dire de la deuxième monte, et des petites séries. En effet, grâce à leurs pattes de fixation amovibles, les alternateurs sont adaptables à différents types de moteur de véhicule automobile.

Le brevet français n° 2 793 300 décrit un alternateur tel qu'indiqué plus haut, dans lequel est usiné, dans une zone de surépaisseur des surfaces périphériques des paliers avant et arrière, une rainure en queue d'aronde qui s'étend parallèlement à l'axe des deux paliers et qui est destinée à la réception de deux pattes de fixation.

Ces pattes sont déplaçables par coulissement dans cette rainure et immobilisables dans celle-ci à une distance axiale l'une de l'autre par des vis de serrage passant à travers des trous pratiqués dans les parois latérales des rainures en queue d'aronde. Le palier avant est en outre configuré de façon à permettre le montage dans différentes positions angulaires d'une patte de mise en tension de la courroie d'entraînement. A cette fin, le palier avant comporte une nervure périphérique en forme d'un arc de cercle et, devant la face latérale de cette nervure, qui est orientée vers la poulie et s'étend radialement, une face axiale d'appui de la patte de mise en tension. Cette patte est déplaçable angulairement sur cette face d'appui et peut être immobilisée dans différentes positions angulaires par des vis traversant la patte et s'engageant dans des trous taraudés dans la face de nervure radiale.

En raison de leur rainure en queue d'aronde unique dans les paliers, l'alternateur connu par ce brevet français présente l'inconvénient majeur de ne pas pouvoir permettre le choix de la position relative de la connectique arrière, qui est de plus en plus critique en raison des contraintes d'implantation et d'encombrement des alternateurs dans leur environnement. Selon les véhicules, la position de la borne de sortie de l'alternateur B⁺ peut avoir une position angulaire différente.

La nervure périphérique en forme d'arc de cercle de l'alternateur connu précité, constitue un obstacle à la réalisation de plusieurs zones de surépaisseur régulièrement angulairement réparties sur la périphérie externe des paliers avant et arrière de l'alternateur.

L'alternateur précité présente aussi l'inconvénient de ne pas autoriser la permutation des pattes de fixation avec la patte de mise en tension de la courroie. En effet, les pattes de fixations insérées dans la rainure de la surépaisseur sont prévues pour porter la majeure partie du poids de l'alternateur tandis que la patte de mise en tension de la courroie est portée par la nervure périphérique en forme d'arc de cercle, non prévue pour porter le poids de la machine par l'intermédiaire de pattes de fixations. Ainsi, l'alternateur décrit dans la demande de brevet précitée ne peut trouver application que pour des alternateurs comportant nécessairement au moins une patte de mise en tension de la courroie. Cet alternateur ne peut donc pas être utilisé pour des véhicules automobiles dans lesquels l'alternateur ne comporte pas de patte de mise en tension de la courroie, mais uniquement trois ou quatre pattes de fixation. Dans ce cas, un dispositif externe à l'alternateur réalise la tension de la courroie.

### Objet de l'invention

La présente invention a pour but de proposer un alternateur du type indiqué plus haut, qui pallie les inconvénients qui viennent d'être énoncés des alternateurs connus et est adapté aux multiples applications dans le domaine des véhicules automobiles, requises par le marché de la deuxième monte et des petites séries.

Elle propose à cet effet une machine électrique tournante telle qu'un alternateur, notamment pour véhicule automobile, adaptable à différents types de moteurs de véhicule automobile et comprenant un carter enfermant un stator et un rotor dont l'axe est supporté dans des paliers avant et arrière et porte une poulie d'entraînement par l'intermédiaire d'une courroie, et des pattes de fixation amovibles de la machine sur un support fixe tel qu'un support solidaire du moteur du véhicule et qui sont susceptibles d'être montées sur la face périphérique d'au moins le palier avant, chacune entre deux faces d'appui latérale prévues sur cette surface périphérique à une distance prédéterminée l'une de l'autre dans la direction périphérique du palier, dans laquelle une face d'appui latérale précitée est formée par la face latérale d'une zone de matière en surépaisseur sur la surface périphérique extérieure du palier, et en ce qu'une patte de fixation précitée est disposée entre deux faces d'appui latéral en regard et appartenant à deux zones de surépaisseur adjacentes.

Ainsi, l'invention proposée permet de choisir la position relative de la connectique arrière de l'alternateur afin de faciliter sa connexion dans le véhicule automobile. L'invention présente aussi l'avantage d'offrir la possibilité de choisir l'emplacement où l'on veut mettre les pattes de fixation sur la surface périphérique extérieure du palier. Un autre avantage selon l'invention consiste à offrir la possibilité d'utiliser uniquement des pattes de fixation ou encore, d'utiliser des pattes de fixation en combinaison avec moins une patte de mise en tension de la courroie.

L'invention n'est pas limitée aux formes de réalisation décrites précédemment à titre d'exemple et s'étend à d'autres variantes que l'homme de l'art pourra envisager dans la cadre des caractéristiques ci-après:
- les deux faces latérales d'appui et la portion de surface périphérique de la machine, entre les deux faces latérales, constituent une glissière de réception et de positionnement d'une patte de fixation.
- une zone de surépaisseur est formée par une zone d'assemblage de l'alternateur.
- un palier précité porte sur sa surface périphérique extérieure une multitude de zones de surépaisseur délimitant une pluralité de glissières avantageusement réparties de façon équidistante.
- une patte de fixation comporte une partie de base par laquelle la patte s'engage dans sa glissière de positionnement et une partie supérieure de fixation sur le support fixe précité.
- une patte de fixation est réalisée sous forme d'une seule pièce dont les parties de base et supérieure sont des parties constituantes.
- les parties de base et supérieure sont des pièces séparées, susceptibles d'être assemblées pour la formation d'une patte de fixation.
- une patte de fixation est fixée dans sa glissière de positionnement par un dispositif de bride prenant appui par une partie sur la base de la patte de fixation et par une autre partie sur la zone de surépaisseur adjacente.
- la base de la patte de fixation a une largeur inférieure à la largeur de la glissière destinée à la recevoir et en ce que le dispositif de bride de fixation comporte un élément en forme d'un coin qui s'engage dans l'intervalle créé lorsque la base est poussée en appui contre l'autre face d'appui et assure par un effet de coincement l'immobilisation de la base dans sa glissière lors du serrage des vis de fixation.
- le dispositif de bride présente la forme générale d'un L dont une branche forme l'élément de coin précité tandis que l'autre branche vient en appui sur la zone de surépaisseur de la périphérie du palier.
- le dispositif de bride comporte une pièce formant coin séparé et une plaque de serrage venant en appui sur la zone de surépaisseur et la pièce formant coin.
- le dispositif de bride comporte une pièce formant coin de forme trapézoïdale et une plaque de serrage venant en appui sur la base de la patte et la zone de surépaisseur et en ce que l'effet de coincement est produit par une vis de serrage traversant la plaque et la pièce de coin et tirant lors du serrage la pièce de coin vers la plaque.
- le dispositif de bride comporte une plaque de serrage dont une partie vient en appui sur la zone de surépaisseur tandis qu'une autre partie vient en appui sur une surface inclinée formant rampe configurée de façon à produire une force repoussant la base de la bride contre la face d'appui de glissière opposée lorsque la partie de plaque est serrée contre la zone de surépaisseur.
- une base de patte présente dans le plan de sa glissière de réception la forme générale d'un U de façon à laisser dégagées, dans sa partie centrale, les ouïes de ventilation pratiquées dans la paroi périphérique du palier.
- une base de patte comporte une lumière de dégagement des ouïes de ventilation pratiquées dans la paroi périphérique du palier.
- les portions de surface du dispositif de bride et de la base de patte de fixation qui sont en appui l'une sur l'autre sont crantées les crans s'étendant avantageusement perpendiculairement à l'axe de la machine pour améliorer l'immobilisation axiale des pattes de fixation.
- la face de pose de la base d'une patte de fixation sur la surface périphérique du palier présente une courbure correspondant à celle de la portion de surface de la surface de palier entre les deux faces d'appui latéral.

### Description sommaire des dessins

D'autres caractéristiques et avantages de l'invention ressortiront clairement de la description qui est faite ci-après, à titre indicatif et nullement limitatif, en référence aux dessins annexés dans lesquels:
- la figure 1 est une vue en perspective du carter d'un alternateur selon l'invention ;
- la figure 2 est une vue en direction de la flèche II de la figure 1 ;
- les figures 3 à 6 sont des vues schématiques, similaires à la figure 2, de quatre versions de réalisation du montage d'une patte de fixation amovible selon l'invention ;
- la figure 7 est une vue de détail, à plus grande échelle, de la zone encerclée en VII de la figure 5,
- la figure 8 est une vue de détail, à plus grande échelle, de la zone encerclée en VIII de la figure 6,
- la figure 9 est une vue en perspective d'une variante de réalisation d'une patte de fixation selon l'invention,
- la figure 10 est une vue à plus grande échelle de la partie indiquée en X sur la figure 1.

### Description de modes de réalisation préférentiels de l'invention

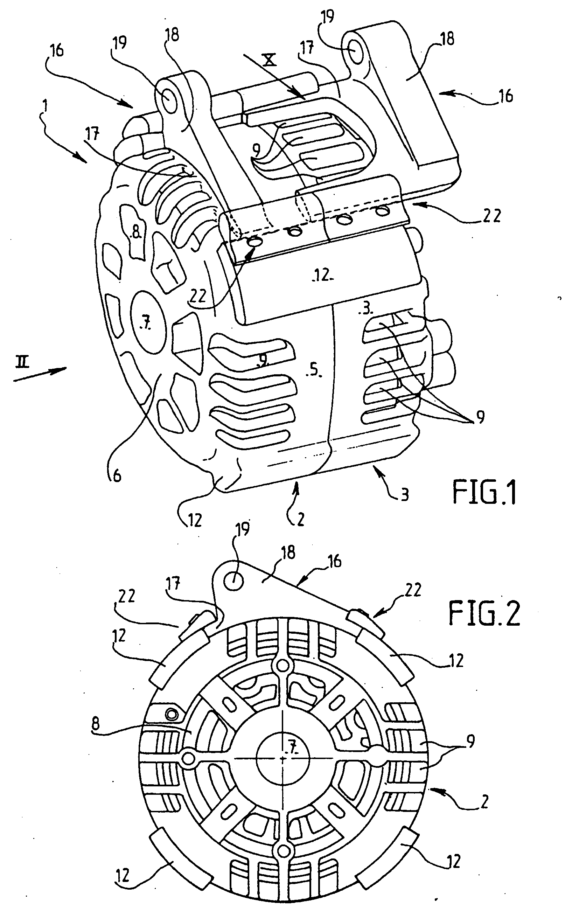

La figure 1 montre un carter désigné par la référence générale 1 d'un alternateur pour véhicule automobile. Ce carter enferme, de façon connue en soi, un stator et un rotor et des dispositifs associés. La structure d'alternateur, à l'intérieur du carter, ne sera pas décrite plus en détail puisqu'elle n'est pas concernée par l'invention.

Le carter 1 est formé par assemblage des paliers avant 2 et arrière 3 destinés, de façon connue en soi, à supporter l'axe du rotor de l'alternateur.

Comme le montre notamment la figure 1, chaque palier présente une configuration classique, c'est-à-dire il présente la forme d'une coupelle comportant une paroi périphérique cylindrique 5 et une paroi de fond 6 au centre duquel se trouve l'orifice 7 de passage de l'arbre rotor, entouré d'une couronne d'orifices 8 de passage de l'écoulement d'un fluide de refroidissement. Dans la partie périphérique 5 et la partie adjacente du fond 6 sont pratiquées quatre séries d'ouïes latérales 9 de sortie de fluide de refroidissement.

Les paliers portent en outre sur leur face périphérique cylindrique 5, réparties angulairement de façon équidistante, quatre zones de matières en surépaisseur 12, qui constituent avantageusement les zones d'assemblage de l'alternateur dans lesquelles passent les tirants destinés à solidariser les paliers avant et arrière. Une zone d'assemblage peut aussi, le cas échéant, être destiné à la fixation du stator. Ces zones en surépaisseur 12 s'étendent parallèlement à l'axe de chaque palier et les zones 12 d'un palier sont alignées avec les zones 12 de l'autre. Ainsi, en utilisant les zones d'assemblages préexistantes, on obstrue pas les ouies de ventilation radiales ce qui garantit un refroidissement optimum de l'alternateur.

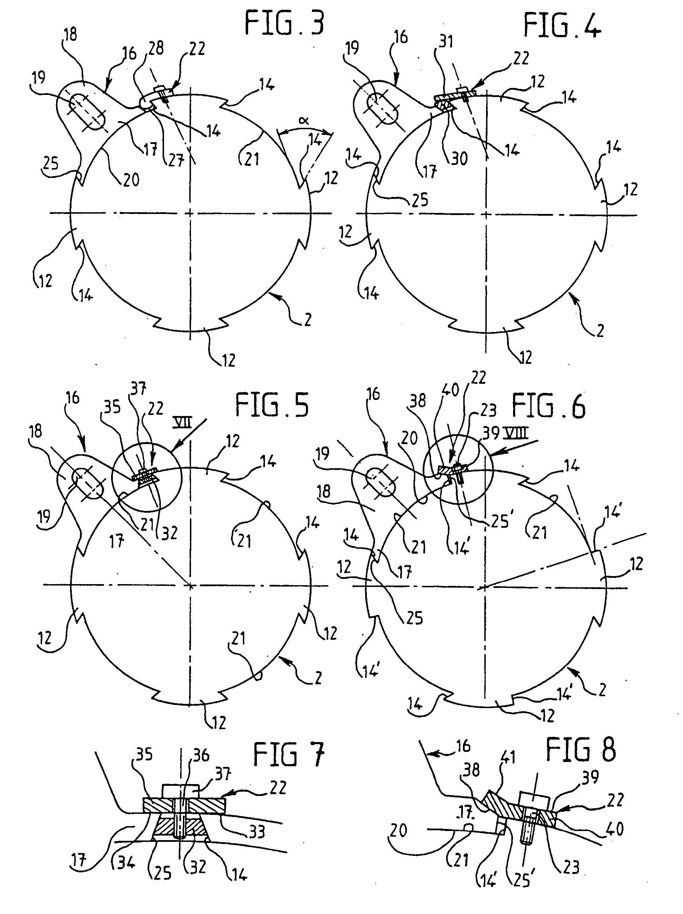

Selon un aspect essentiel de l'invention, ces zones de surépaisseur 12 sont utilisées pour rendre le carter 1 et ainsi l'alternateur adaptable à différents types de moteurs de véhicule automobile. Comme le montrent notamment les figures 3 à 6, à cette fin les faces latérales 14 des zones de surépaisseur 12 sont configurées de façon à pouvoir positionner entre les faces 14 en regard de deux zones de surépaisseur 12 adjacentes une patte 16 de fixation du carter à un support du moteur de véhicule automobile ou directement sur ce moteur. Il est à noter que les pattes 16 peuvent être utilisées indifféremment comme pattes de fixation ou comme pattes de mise en tension de la courroie d'entraînement de la poulie classique, connue en soi et donc non représentée.

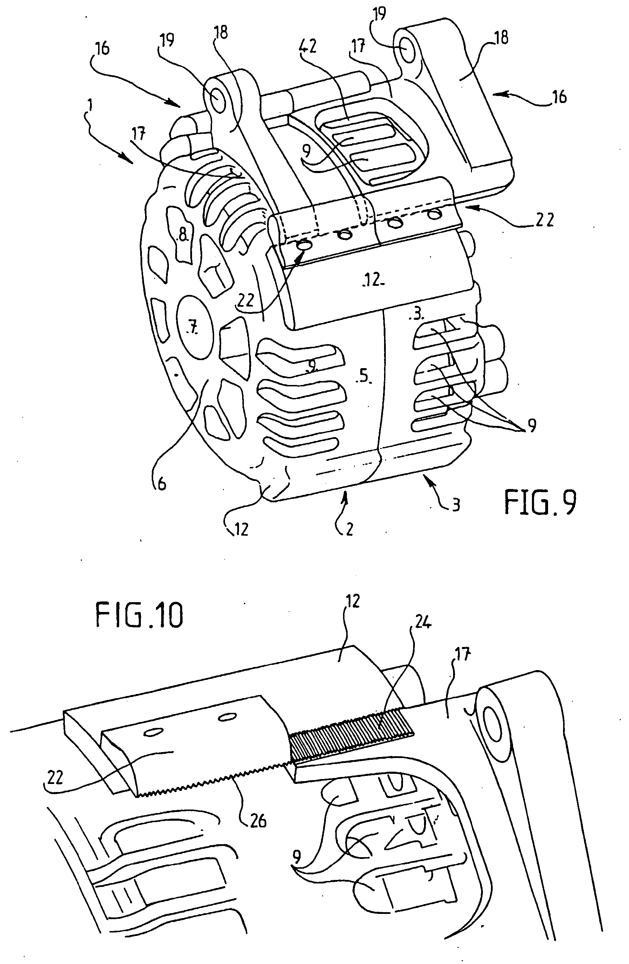

Comme on le voit sur les figures, une patte 16 selon l'invention qui est ainsi amovible, se compose d'une partie de base 17 et d'une partie supérieure 18. La partie de base 17 assure l'interface avec le palier et est destinée à s'engager entre les deux faces latérales 14 correspondantes de deux zones de surépaisseur 12 adjacente de la périphérie du palier. La face 20 de pose de la base 17 de la patte sur la surface périphérique 5 du palier présente une courbure correspondant à celle de la portion de surface 21 de la surface 5 entre les deux faces d'appui latéral 14. La base permet à la patte de coulisser dans la glissière formée par la portion de la face périphérique 21 du palier et des deux faces latérales 14 des deux surépaisseurs 12. La base 17 comporte, pour sa fixation finale, des lignes crantées, représentées en 24 sur la figure 10, perpendiculaires à l'axe de l'alternateur, sur le dessus de la base coopérant avec des organes de fixation 22 qui sont décrits plus loin. La longueur, dans la direction axiale, de la base coulissante 17 de la patte dépend du déport axial de la patte, comme on le voit sur la figure 1, mais doit permettre la fixation finale sûre de la patte sur le palier et en même temps de dégager les ouïes de sortie 9. Comme le montre la figure 1, la base de patte 17 peut avoir dans le plan parallèle aux glissières un profilé en U, les bords extérieurs des branches coopérant avec les faces d'appui 14. Grâce à ce profilé, les ouïes 9 peuvent rester dégagées.

La figure 9 illustre une variante de réalisation d'une patte de fixation 16 selon l'invention. Dans ce cas, la base de patte 17 est pourvue d'une lumière 42 qui assure le dégagement des ouïes 9.

La partie supérieure 18 d'une patte 16 assure l'interface avec le moteur du véhicule automobile. Elle est pourvue d'un trou 19 pour sa fixation sur le support de ce moteur, de forme circulaire pour les pattes de fixation telles que représentées aux figures 1,2, 9 ou 10, ou oblongue pour les pattes de tension de la courroie telles que représentées aux figures 3 à 6. Bien entendu, la forme des trous 19 pour les pattes de fixations ou de tension de la courroie peuvent présenter des formes différentes à celles précédemment décrites. Ainsi par exemple, les pattes de tension de la courroie peuvent également présenter des trous 19 circulaires taraudés ou lisses. La patte peut être différente d'une application à l'autre selon la position angulaire, la hauteur de l'axe, le diamètre de l'alésage et l'épaisseur de son moyeu, ce qui nécessite de disposer d'un certain nombre de pattes différentes pour couvrir les différents cas d'application. Il est à noter que les pattes des paliers avant et arrière sont interchangeables et que les parties de base et supérieure peuvent appartenir à une même pièce ou être deux pièces préassemblées.

Le réglage de la position, d'une patte 16 de fixation ou d'une patte de mise en tension de courroie, dans sa glissière et sa fixation finale dans la position appropriée sur le palier support se fait à l'aide d'une bride 22 qui est posée de façon à couvrir latéralement la patte 16 à fixer et la partie du palier externe à la glissière, c'est-à-dire la surface extérieure de la zone de surépaisseur 12 au voisinage de la glissière. La bride est fixée au palier par l'intermédiaire d'au moins une vis 23 implantées dans des taraudages pratiqués dans la zone de surépaisseur 12. Avantageusement, il peut y avoir une zone crantée. La surface interne de la partie de la bride qui vient en appui sur la zone crantée 24 sur le dessus de la base de patte 17 est crantée comme indiqué à 26 sur la figure 10, de façon à correspondre aux crans de la base. La coïncidence des parties crantées de la patte et de la bride est facilitée par un jeu ou une forme oblongue des trous dans la bride, permettant lors du serrage d'une vis de déplacer légèrement la bride. Ainsi, la patte sera toujours positionnée exactement à la place voulue. On assure ainsi l'immobilisation axiale de pattes de fixation.

Les figures 3 à 6 montrent quatre possibilités d'une fixation d'une patte 16 dans une glissière d'un palier avant ou arrière.

Dans la solution représentée sur la figure 3, les deux faces latérales 14 de la glissière font un angle α avec le fond 21 de la glissière, qui est inférieur ou égal à 90°.

Les deux faces latérales 25 de la base 17 de la patte 16 présentent une inclinaison correspondant à celle des faces 14, mais la largeur de la glissière du palier est supérieure à la largeur de la base 17. Ainsi, lorsque l'on place la patte dans sa glissière, une face latérale 25 est plaquée sur une face d'appui 14 du palier. Mais de l'autre côté, il existe un jeu 27 par exemple de plusieurs millimètres entre l'autre face latérale 25 de la base et la face d'appui 14 correspondante de la glissière.

Pour fixer la base 17 de la patte 16 dans la glissière du palier, on utilise une bride 22 qui possède sur un côté une portion en saillie en forme d'un coin 28 qui s'engage dans l'intervalle 27 entre les deux faces écartées 25 et 14 et assure, par un effet de coincement, le blocage de la base 17 de la patte 16 dans la glissière lors du serrage des vis 23. Suivant sa longueur, la bride peut comporter un nombre approprié de vis de fixation. Avantageusement, l'orientation des vis n'est pas radiale et l'axe des vis forme avec la surface périphérique de la tangente à la surface de la surépaisseur 12 du côté opposé à celle de la face 14 un angle inférieur à 90°.

Avantageusement, selon un autre mode de réalisation de l'invention, les deux faces 14 de deux surépaisseurs 12 adjacentes formant une glissière pour une patte de fixation 16 présentent des angles différents. D'une part, l'angle α, précédemment décrit, formé par la face latérale 14 de la glissière avec le fond 21 de la glissière est inférieur à 90° pour le coté de la glissière opposé à celui portant la bride 22 et, d'autre part, l'angle α formé pour le coté de la glissière portant la bride 22 est égal ou inférieur à 90°. La face 14 coopérant avec la bride de fixation 22 présente une direction essentiellement radiale, voire radiale, ce qui présente l'avantage de bien guider radialement la bride 22 lors du vissage des vis 23 et ainsi améliorer le blocage de la patte de fixation 16 par un meilleur appui de la bride 22 sur la face 25 de la patte 16 en regard.

Avantageusement, quel que soit le mode de réalisation, les deux faces latérales 25 de la base 17 de la patte 16 présentent une inclinaison correspondant à celle de la face 14 opposée à celle portant la bride. Ainsi, il est possible d'insérer les pattes de fixation dans la rainure indifféremment selon un des deux sens possible dans la direction axiale de la rainure

Avantageusement, la matière utilisée pour la réalisation de la bride est un acier fritté qui présente la caractéristique d'être peu élastique et économique.

La solution de fixation représentée sur la figure 4 correspond dans son principe à la solution illustrée sur la figure 3. La seule différence notable réside dans le fait que la partie de coin 28 est maintenant formée par une pièce 30 séparée qui sera poussée dans l'intervalle 27 par une plaque de bride 31, lors du serrage des vis 23.

La fixation à l'aide d'un coin a pour avantage que l'on ajoute à la fixation par pression une composante latérale due aux efforts de coincement exercés. Avantageusement, la matière utilisée pour la forme de la bride à coin incorporé pourrait être à base d'acier, d'où il résultera un encombrement plus faible qu'avec un choix de matière en alliage d'aluminium.

La figure 5 illustre un mode de fixation à l'aide d'une bride 22 en forme d'une plaque 35 qui coopère avec un organe en forme d'un coin à section transversale trapézoïdale 32, comme on le voit plus en détail sur la figure 7. Dans ce mode de réalisation, la surface latérale d'appui 25 de la base de patte 17 du côté de l'application de la plaque de bride 35 présente une inclinaison qui est opposée à celle de la face d'appui 14 de la glissière. Lorsque l'on souhaite positionner la patte 16 dans sa glissière, on met en butée la face latérale 25 de la base de patte 17 et la face d'appui 14 correspondante de la glissière sur un côté et insère la pièce de forme trapézoïdale 32 dans l'intervalle entre l'autre paire de faces 25 et 14. La pièce 32 comporte deux trous taraudés destinés à recevoir chacun une vis de serrage notée 36 qui traverse la bride 22 et dont la tête 37 prend appui sur la face supérieure de la bride. Lorsque l'on serre les vis 36, la pièce trapézoïdale 32 qui est prisonnière tend à remonter et à se coincer entre les faces 25 et 14. Il en résulte une immobilisation et une solidarisation de la patte dans sa glissière.

La figure 6 illustre un mode de fixation avantageux. Selon ce mode, une face de la glissière indiquée par la référence spécifique 14', au lieu d'être inclinée comme les faces d'appui 14, forme un angle droit avec le fond de la glissière à cet endroit, c'est-à-dire s'étend sensiblement radialement, comme le montre la figure. La face latérale correspondante 25' de la base de patte 17 présente la même orientation que la face 14'. Le bord de la base de patte 17 le long de la face 25' présente une inclinaison et constitue une rampe de poussée latérale 38. Le dispositif de bride 22 en plus de la rampe 38 comporte une plaque 39 coudée de façon appropriée, qui repose par une branche 40 sur la zone extérieure de la glissière et par sa branche inclinée 41 sur la rampe 38. Lorsque la branche 39 en appui sur le palier est serrée par les vis de serrage 23 contre la surface de palier, la branche 40 en appui sur la rampe 38 pousse la base 17 de la patte 16 dans sa glissière sur la face d'appui 14 opposée.

Le mode de fixation selon la figure 6 présente l'avantage que la patte ainsi fixée sera coincée dans son logement de glissière. La matière de la bride pourrait être différente de celle du palier, si cela s'avérait nécessaire pour sa résistance aux efforts. Les faces en regard de la bride et de la patte peuvent avoir des stries qui permettront une meilleure résistance au glissement axial.

Il ressort de la description qui précède, que grâce aux systèmes de fixation des pattes amovibles, qui viennent d'être décrits, l'invention permet d'utiliser des alternateurs de grandes séries classiques pour différents types de véhicule automobile. L'invention permet d'adapter un tel alternateur à un type donné de moteur de véhicule automobile par simple implantation de pattes de fixation dans une ou plusieurs glissières angulairement réparties autour des paliers avant et/ou arrière, par pivotement, par quart dans le cas décrit de quatre glissières, de la position des bornes électriques et par positionnement axial approprié des pattes dans leur glissière. Grâce au crantage des surfaces coopérantes, on obtient une fixation sur des pattes dans leur glissière.

Bien entendu, diverses modifications peuvent être apportées à l'invention telle que décrite ci-avant et représentée sur les figures. Ainsi, le nombre de zones de surépaisseur sur la périphérie des paliers et ainsi le nombre des glissières pourrait être différent de quatre. Il est possible de remplacer les brides par un cerclage. On pourrait également envisager de fixer les pattes directement sur le palier en prévoyant des trous oblongs dans les parties ou souder en frète celles-ci après positionnement dans leur position.

L'invention trouve particulièrement avantage dans l'industrie de la rénovation des alternateurs de toutes origines permettant l'échange standard consistant à rendre un appareil usagé à nouveau opérationnel après l'avoir remis en état par exemple par nettoyage, usinage ou remplacement de composants défectueux. Ainsi, une machine électrique rénovée selon l'invention permet la reconstruction de machines électriques pouvant être dédiées à d'autres applications que celles d'origines. Cette machine électrique selon l'invention permet de réduire les stocks chez les réparateurs de véhicules automobiles car une même machine pourra être dédiée à plusieurs types de véhicule automobile et non plus limitée à la seule application d'origine.

Ces alternateurs réalisés selon l'invention constituent donc des "alternateurs multi-applications".

Les alternateurs multi-applications pourront être équipés de circuits magnétiques et de systèmes de régulation et de redressement permettant de fournir la tension en usage actuellement sur les véhicules de tourisme 14 Volts, mais aussi toutes autres tensions telles que 6, 28 ou 42 volts. De même, ces alternateurs pourront fournir un courant continu ou alternatif et assurer toutes les fonctions additionnelles associées au régulateur de tension.

Les alternateurs multi-applications, neufs ou rénovés, peuvent être refroidis par air ou par un liquide de refroidissement. Les alternateurs refroidis par air selon l'invention sont dotés d'une ventilation interne ou externe. Les alternateurs refroidis par un liquide de refroidissement comportent de manière connue en soi des doubles parois permettant la circulation du liquide de refroidissement. Dans ce cas, les trous de fixation des brides seront borgnes ou non débouchants.

## Revendications

1. Machine électrique tournante telle qu'un alternateur, notament pour véhicule automobile, adaptable à différents types de moteurs de véhicule automobile et comprenant un carter comportant un palier avant et arrière enfermant un stator et un rotor dont l'axe est supporté dans les paliers avant et arrière et porte une poulie d'entraînement par l'intermédiaire d'une courroie, **caractérisée en ce que** des pattes amovibles (16) de la machine sont susceptibles d'être montées sur la face périphérique d'au moins le palier avant, chacune entre deux faces d'appui latérale (14) prevues sur cette surface périphérique à une distance prédéterminée l'une de l'autre dans la , direction périphérique du palier, et **en ce qu**'une face d'appui latérale précitée (14, 14') est formée par la face latérale d'une zone de matière en surépaisseur (12) sur la surface périphérique extérieure du palier, et **en ce qu'**une patte amovible (16) précitée est disposée entre deux faces d'appui latéral (14, 14') en regard et appartenant à deux zones de surépaisseur (12) adjacentes.

2. Machine électrique tournante selon la revendication 1, **caractérisée en ce que** les deux faces latérales d'appui (14, 14') et la portion de surface périphérique (21) de la machine, entre les deux faces latérales, constituent une glissière de réception et de positionnement d'une patte amovible (16).

3. Machine électrique tournante selon la revendication 1 ou 2 **caractérisée en ce que** les deux faces latérales d'appui (14, 14') présentent des angles différents.

4. Machine électrique tournante selon l'une quelconque des revendications précédentes **caractérisée en ce que** des ouies de ventilations (9) se trouvent entre deux surépaisseurs (12) formant une glissière.

5. Machine électrique tournante selon la revendication 1, **caractérisée en ce qu'**une zone de surépaisseur (12) est formée par une zone d'assemblage de l'alternateur.

6. Machine électrique tournante selon l'une quelconque des revendications précédentes, **caractérisée en ce qu'**un palier précité (2, 3) porte sur sa surface périphérique extérieure une multitude de zones de surépaisseur (12) délimitant une pluralité de glissières.

7. Machine électrique tournante selon la revendication précédente **caractérisée en ce que** les glissières sont réparties de façon équidistante.

8. Machine électrique tournante selon l'une quelconque des revendications précédentes **caractérisé en ce que** des zones de matière en surépaisseur (12) de l'un des paliers sont alignés avec des zones de matière en surépaisseur (12) de l'autre des paliers et **en ce que** les zones de matière en surépaisseur (12) s'étendent parallèlement à l'axe de chaque palier (2,3).

9. Machine électrique tournante selon la revendication 1, **caractérisée en ce qu'**une patte amovible (16) comporte une partie de base (17) par laquelle la patte s'engage dans sa glissière de positionnement et une partie supérieure (18) pourvue d'un trou (19).

10. Machine électrique tournante selon la revendication précédente **caractérisée en ce que** le trou (19) est circulaire.

11. Machine électrique tournante selon la revendication 9 **caractérisée en ce que** le trou (19) est oblong.

12. Machine électrique tournante selon la revendication 9, **caractérisée en ce qu'**une patte amovible (16) est réalisée sous forme d'une seule pièce dont les parties de base (17) et supérieure (18) sont des parties constituantes.

13. Machine électrique tournante selon la revendication 9, **caractérisée en ce que** les parties de base (17) et supérieure (18) sont des pièces séparées, susceptibles d'être assemblées pour la formation d'une patte amovible (16).

14. Machine électrique tournante selon la revendication 2, **caractérisée en ce qu'**une patte amovible (16) est fixée dans sa glissière de positionnement par un dispositif de bride (22) prenant appui par une partie sur la base (17) de la patte amovible (16) et par une autre partie sur la zone de surépaisseur (12) adjacente.

15. Machine électrique tournante selon la revendication précédente, **caractérisée en ce que** la base (17) de la patte amovible (16) a une largeur inférieure à la largeur de la glissière destinée à la recevoir et **en ce que** le dispositif de bride de fixation (22) comporte un élément en forme d'un coin (28, 30, 32) qui s'engage dans l'intervalle (27) créé lorsque la base (17) est poussée en appui contre l'autre face d'appui (14) et assure par un effet de coincement l'immobilisation de la base dans sa glissière lors du serrage des vis de fixation (23).

16. Machine électrique tournante selon la revendication précédente **caractérisée en ce que** la vis de fixation (23) est implantée dans un taraudage pratiqué dans la zone de matière en surépaisseur (12).

17. Machine électrique tournante selon la revendication 15 ou 16 **caractérisée en ce que** l'axe de la vis de fixation (23) forme avec la surface périphérique de la tangente à la surface de matière en surépaisseur (12), du coté opposé à l'autre face latérale d'appui (14), un angle inférieur à 90°.

18. Machine électrique tournante selon la revendication 14 ou 15, **caractérisée en ce que** le dispositif de bride (22) présente la forme générale d'un L dont une branche forme l'élément de coin (28) précité tandis que l'autre branche vient en appui sur la zone de surépaisseur (12) de la périphérie du palier.

19. Machine électrique tournante selon la revendication 14 ou 15, **caractérisée en ce que** le dispositif de bride (22) comporte une pièce formant coin séparé (30) et une plaque de serrage (31) venant en appui sur la zone de surépaisseur (12) et la pièce formant coin (30) pour pousser ladite pièce dans l'intervalle (27) lors du serrage de la vis (23) de fixation.

20. Machine électrique tournante selon la revendication 14 ou 15, **caractérisée en ce que** le dispositif de bride (22) comporte une pièce formant coin de forme trapézoïdale (32) et une plaque de serrage (35) venant en appui sur la base (17) de la patte amovible (16) et la zone de surépaisseur (12) et **en ce que** l'effet de coincement est produit par une vis de serrage traversant la plaque et la pièce de coin (32) et tirant lors du serrage la pièce de coin (32) vers la plaque.

21. Machine électrique tournante selon la revendication 14 ou 15, **caractérisée en ce que** le dispositif de bride (22) comporte une plaque de serrage (39) dont une partie (40) vient en appui sur la zone de surépaisseur (12) tandis qu'une autre partie (41) vient en appui sur une surface inclinée formant rampe (38) configurée de façon à produire une force repoussant la base (17) de la bride (16) contre la face d'appui de glissière (14) opposée lorsque la partie de plaque (48) est serrée contre la zone de surépaisseur (12).

22. Machine électrique tournante selon la revendication précédente **caractérisée en ce que** l'autre face d'appui latéral (14') de la glissière forme un angle droit avec le fond de la glissière et **en ce que** la face latérale de la base (17) de la patte amovible (16) présente la même orientation que ladite autre face d'appui latéral.

23. Machine électrique tournante selon la revendication 2 **caractérisé en ce qu'**une patte amovible (16) est fixée dans sa glissière de positionnement par un dispositif de cerclage.

24. Machine électrique tournante selon l'une quelconque des revendications 9 à 13, **caractérisée en ce qu'**une base de patte (17) présente dans le plan de sa glissière de réception la forme générale d'un U de façon à laisser dégagées, dans sa partie centrale, les ouïes de ventilation (9) pratiquées dans la paroi périphérique du palier.

25. Machine électrique tournante selon l'une quelconque des revendications 9 à 13, **caractérisée en ce qu'**une base de patte (17) comporte une lumière (42) de dégagement des ouïes de ventilation (9) pratiquées dans la paroi périphérique du palier.

26. Machine électrique tournante selon l'une quelconque des revendications 14 à 22, **caractérisée en ce que** les portions de surface du dispositif de bride et de la base de patte de fixation (17) qui sont en appui l'une sur l'autre sont crantées (24, 26), les crans s'étendant avantageusement perpendiculairement à l'axe de la machine pour améliorer l'immobilisation axiale des pattes amovible (16).

27. Machine électrique tournante selon la revendication précédente **caractérisée en ce que** la coïncidence des crans du dispositif de bride (22) et de la base (17) de la patte amovible (16) est obtenue par un jeu.

28. Machine électrique tournante selon la revendication précédente **caractérisée en ce que** la coïncidence des crans du dispositif de bride (22) et de la base (17) de la patte amovible (16) est obtenue par une forme oblongue de trous dans le dispositif de bride (22) permettant lors du serrage d'une vis de déplacer le dispositif de bride (22).

29. Machine électrique tournante selon l'une quelconque des revendications 9 à 13, **caractérisée en ce que** la face (20) de pose de la base (17) d'une patte amovible (16) sur la surface périphérique du palier présente une courbure correspondant à celle de la portion de surface (21) de la surface de palier (5) entre les deux faces d'appui latéral (14).

30. Machine électrique tournante selon l'une quelconque des revendications précédentes, **caractérisée en ce que** la patte amovible (16) consiste en une patte de fixation sur un support fixe tel qu'un support solidaire du moteur du véhicule.

31. Machine électrique tournante selon l'une quelconque des revendications 1 à 31, **caractérisée en ce que** la patte amovible (16) consiste en une patte de mise en tension de la courroie.

32. Machine électrique tournante selon la revendication 3 combinée avec la revendications 14 ou 15 **caractérisée en ce que** l'angle de la face latérale d'appui opposé à celui portant la bride est inférieur à 90° et **en ce que** l'angle de la face latérale d'appui situé du coté de la bride est essentiellement de 90°.

## Claims

1. Rotary electric machine such as an alternator, in particular for a motor vehicle, which can be adapted to different types of motor vehicle engines, and comprising a housing which includes a front and rear bearing containing a stator and a rotor, the shaft of which is supported in the front and rear bearings, and supports a pulley for driving by means of a belt, **characterised in that** removable lugs (16) of the machine can be fitted on the peripheral face of at least the front bearing, each between two lateral support faces (14) provided on this peripheral surface at a predetermined distance from one another in the peripheral direction of the bearing, and **in that** an aforementioned lateral support face (14, 14') is formed by the lateral face of an area of additional thickness of material (12) on the outer peripheral surface of the bearing, and **in that** an aforementioned removable lug (16) is disposed between two lateral support faces (14, 14') which are opposite one another and belong to two adjacent areas of additional thickness (12).

2. Rotary electric machine according to claim 1, **characterised in that** the two lateral support faces (14, 14') and the portion of peripheral surface (21) of the machine, between the two lateral faces, constitute a slide for receipt and positioning of a removable lug (16).

3. Rotary electric machine according to claim 1 or claim 2, **characterised in that** the two lateral support faces (14, 14') have different angles.

4. Rotary electric machine according to any one of the preceding claims, **characterised in that** the ventilation air admissions (9) are between two additional thicknesses (12) which form a slide.

5. Rotary electric machine according to claim 1, **characterised in that** an area of additional thickness (12) is formed by an area of assembly of the alternator.

6. Rotary electric machine according to any one of the preceding claims, **characterised in that** an aforementioned bearing (2, 3) supports on its outer peripheral surface a multitude of areas of additional thickness (12) delimiting a plurality of slides.

7. Rotary electric machine according to the preceding claim, **characterised in that** the slides are distributed equidistantly.

8. Rotary electric machine according to any one of the preceding claims, **characterised in that** the areas of additional thickness of material (12) of one of the bearings are aligned with areas of additional thickness of material (12) of the other one of the bearings, and **in that** the areas of additional thickness of material (12) extend parallel to the axis of each bearing (2, 3).

9. Rotary electric machine according to claim 1, **characterised in that** a removable lug (16) comprises a base part (17) by means of which the lug engages in its positioning slide, and an upper part (18) which is provided with a hole (19).

10. Rotary electric machine according to the preceding claim, **characterised in that** the hole (19) is circular.

11. Rotary electric machine according to claim 9, **characterised in that** the hole (19) is oblong.

12. Rotary electric machine according to claim 9, **characterised in that** a removable lug (16) is provided in the form of a single piece, the base (17) and upper (18) parts of which are component parts.

13. Rotary electric machine according to claim 9, **characterised in that** the base (17) and upper (18) parts are separate pieces, which can be assembled for formation of a removable lug (16).

14. Rotary electric machine according to claim 2, **characterised in that** a removable lug (16) is secured in its positioning slide by means of a flange device (22) which is supported by one part on the base (17) of the removable lug (16), and by another part on the adjacent area of additional thickness (12).

15. Rotary electric machine according to the preceding claim, **characterised in that** the base (17) of the removable lug (16) has a thickness which is smaller than the width of the slide which is designed to receive it, and **in that** the securing flange device (22) comprises an element in the form of a wedge (28, 30, 32) which is engaged in the gap (27) created when the base (17) is thrust such as to be supported against the other support face (14), and assures by means of a wedging effect the immobilisation of the base in its slide when the securing screws (23) are tightened.

16. Rotary electric machine according to the preceding claim, **characterised in that** the securing screw (23) is implanted in a female thread provided in the area of additional thickness of material (12).

17. Rotary electric machine according to the claim 15 or 16, **characterised in that** the shaft of the securing screw (23) forms an angle of less than 90° with the peripheral surface of the tangent to the surface of the additional thickness of material (12), on the side opposite the other lateral support face (14).

18. Rotary electric machine according to claim 14 or 15, **characterised in that** the flange device (22) has the general form of an L, a branch of which forms the aforementioned wedging element (28), whereas the other branch is supported on the area of additional thickness (12) of the periphery of the bearing.

19. Rotary electric machine according to claim 14 or 15, **characterised in that** the flange device (22) comprises a piece which forms a separate wedge (30) and a clamping plate (31) which is supported on the area of additional thickness (12) and the piece which forms a wedge (30), in order to thrust the said piece into the gap (27) when the securing screw (23) is tightened.

20. Rotary electric machine according to claim 14 or 15, **characterised in that** the flange device (22) comprises a piece which forms a wedge with a trapezoidal form (32), and a clamping plate (35) which is supported on the base (17) of the removable lug (16) and the area of additional thickness (12), and **in that** the wedging effect is produced by a tightening screw which passes through the plate and the wedging piece (32), and which, when it is tightened, pulls the wedging piece (32) towards the plate.

21. Rotary electric machine according to claim 14 or 15, **characterised in that** the flange device (22) comprises a clamping plate (39), part (40) of which is supported on the area of additional thickness (12), whereas another part (41) is supported on an inclined surface which forms a ramp (38), and is configured such as to produce a force which thrusts the base (17) of the flange (16) against the slide support face (14) opposite, when the part of the plate (48) is clamped against the area of additional thickness (12).

22. Rotary electric machine according to the preceding claim, **characterised in that** the other lateral support face (14') of the slide forms a right-angle with the base of the slide, and **in that** the lateral face of the base (17) of the removable lug (16) has the same orientation as the said other lateral support face.

23. Rotary electric machine according to claim 2, **characterised in that** a removable lug (16) is secured in its positioning slide by means of a hoop device.

24. Rotary electric machine according to any one of claims 9 to 13, **characterised in that** a lug base (17) has on the plane of its receipt slide the general form of a "U", such as to leave clear in its central part the ventilation air admissions (9) which are provided in the peripheral wall of the bearing.

25. Rotary electric machine according to any one of claims 9 to 13, **characterised in that** a lug base (17) comprises an opening (42) to leave clear the ventilation air admissions (9) which are provided in the peripheral wall of the bearing.

26. Rotary electric machine according to any one of claims 14 to 22, **characterised in that** the portions of surface area of the flange device and of the base of the securing lug (17) which are supported one on the other are notched (24, 26), the notches advantageously extending perpendicularly to the axis of the machine in order to improve the axial immobilisation of the removable lugs (16).

27. Rotary electric machine according to the preceding claim, **characterised in that** the coincidence of the notches of the flange device (22) and of the base (17) of the removable lug (16) is obtained by means of play.

28. Rotary electric machine according to the preceding claim, **characterised in that** the coincidence of the notches of the flange device (22) and of the base (17) of the removable lug (16) is obtained by an oblong formation of holes in the flange device (22), which makes it possible to displace the flange device (22) when a screw is tightened.

29. Rotary electric machine according to any one of claims 9 to 13, **characterised in that** the face (20) for laying the base (17) of a removable lug (16) on the peripheral surface of the bearing has a curvature corresponding to that of the portion of surface area (21) of the bearing surface (5) between the two lateral support faces (14).

30. Rotary electric machine according to any one of the preceding claims, **characterised in that** the removable lug (16) consists of a lug for securing on a fixed support, such as a support which is integral with the vehicle engine.

31. Rotary electric machine according to any one of claims 1 to 31, **characterised in that** the removable lug (16) consists of a lug for making the belt taut.

32. Rotary electric machine according to claim 3 combined with claims 14 or 15, **characterised in that** the angle of the lateral support face opposite that which supports the flange is less than 90°, and **in that** the angle of the lateral support face which is situated on the flange side is substantially 90°.

## Patentansprüche

1. Rotierende elektrische Maschine, wie ein Wechselstromgenerator, insbesondere für Kraftfahrzeuge, der an verschiedene Arten von Kraftfahrzeugmotoren anpassbar ist und ein Gehäuse mit einem vorderen und einem hinteren Lagerschild umfasst, die einen Stator und einen Rotor umschließen, dessen Achse in dem vorderen und hinteren Lagerschild gelagert ist und eine Riemenscheibe für den Antrieb über einen Riemen trägt, **dadurch gekennzeichnet, dass** abnehmbare Ansätze (16) der Maschine auf der Umfangsfläche wenigstens des vorderen Lagerschildes angebracht werden können, jeweils zwischen zwei seitlichen Auflageflächen (14), die auf dieser Umfangsfläche in einem vorbestimmten Abstand zueinander in der Umfangsrichtung des Lagerschilds vorgesehen sind, **und dass** eine vorgenannte seitliche Auflagefläche (14, 14') durch die Seitenfläche eines einstückigen Erhebungsbereichs (12) auf der äußeren Umfangsfläche des Lagerschilds gebildet wird **und dass** ein vorgenannter abnehmbarer Ansatz (16) zwischen zwei seitlichen Auflageflächen (14, 14'), die einander gegenüberliegen und zu zwei benachbarten Erhebungsbereichen (12) gehören, angeordnet ist.

2. Rotierende elektrische Maschine nach Anspruch 1, **dadurch gekennzeichnet, dass** die beiden seitlichen Auflageflächen (14, 14') und der Abschnitt der Umfangsfläche (21) der Maschine zwischen den beiden Seitenflächen eine Gleitführung zur Aufnahme und Positionierung eines abnehmbaren Ansatzes (16) bilden.

3. Rotierende elektrische Maschine nach Anspruch 1 oder 2, **dadurch gekennzeichnet, dass** die beiden seitlichen Auflageflächen (14, 14') unterschiedliche Winkel aufweisen.

4. Rotierende elektrische Maschine nach einem der vorangehenden Ansprüche, **dadurch gekennzeichnet, dass** sich Belüftungsöffnungen (9) zwischen zwei eine Gleitführung bildenden Erhebungen (12) befinden.

5. Rotierende elektrische Maschine nach Anspruch 1, **dadurch gekennzeichnet, dass** ein Erhebungsbereich (12) durch einen Zusammenbaubereich zum Zusammenbau des Wechselstromgenerators gebildet wird.

6. Rotierende elektrische Maschine nach einem der vorangehenden Ansprüche, **dadurch gekennzeichnet, dass** ein vorgenannter Lagerschild (2, 3) auf seiner äußeren Umfangsfläche eine Vielzahl von Erhebungsbereichen (12) trägt, die eine Mehrzahl von Gleitführungen begrenzen.

7. Rotierende elektrische Maschine nach dem vorangehenden Anspruch, **dadurch gekennzeichnet, dass** die Gleitführungen abstandsgleich verteilt sind.

8. Rotierende elektrische Maschine nach einem der vorangehenden Ansprüche, **dadurch gekennzeichnet, dass** einstückige Erhebungsbereiche (12) eines der Lagerschilde auf einstückige Erhebungsbereiche (12) des anderen Lagerschilds ausgerichtet sind **und dass** sich die einstückigen Erhebungsbereiche (12) parallel zur Achse jedes Lagerschilds (2, 3) erstrecken.

9. Rotierende elektrische Maschine nach Anspruch 1, **dadurch gekennzeichnet, dass** ein abnehmbarer Ansatz (16) einen Basisteil (17), durch den der Ansatz in seine Positionierungsgleitführung eingreift, und einen oberen Teil (18) umfasst, der mit einem Loch (19) versehen ist.

10. Rotierende elektrische Maschine nach dem vorangehenden Anspruch, **dadurch gekennzeichnet, dass** das Loch (19) kreisförmig ausgebildet ist.

11. Rotierende elektrische Maschine nach Anspruch 9, **dadurch gekennzeichnet, dass** das Loch (19) länglich ausgebildet ist.

12. Rotierende elektrische Maschine nach Anspruch 9, **dadurch gekennzeichnet, dass** ein abnehmbarer Ansatz (16) in Form eines einzigen Elements ausgeführt ist, von dem der Basisteil (17) und der obere Teil (18) Bestandteile bilden.

13. Rotierende elektrische Maschine nach Anspruch 9, **dadurch gekennzeichnet, dass** der Basisteil (17) und der obere Teil (18) getrennte Elemente sind, die zur Bildung eines abnehmbaren Ansatzes (16) zusammengefügt werden können.

14. Rotierende elektrische Maschine nach Anspruch 2, **dadurch gekennzeichnet, dass** ein abnehmbarer Ansatz (16) in seiner Positionierungsgleitführung durch eine Flanschvorrichtung (22) befestigt ist, die durch einen Teil auf der Basis (17) des abnehmbaren Ansatzes (16) und durch einen anderen Teil auf dem benachbarten Erhebungsbereich (12) zur Auflage kommt.

15. Rotierende elektrische Maschine nach dem vorangehenden Anspruch, **dadurch gekennzeichnet, dass** die Basis (17) des abnehmbaren Ansatzes (16) eine Breite hat, die kleiner als die Breite der Gleitführung für ihre Aufnahme ist, **und dass** die Befestigungsflanschvorrichtung (22) ein Element in Form eines Keils (28, 30, 32) umfasst, das in den Zwischenraum (27) eingreift, der entsteht, wenn die Basis (17) in Anlage gegen die andere Auflagefläche (14) gedrückt wird, und durch einen Verkantungseffekt die Sicherung der Basis in ihrer Gleitführung beim Anziehen der Befestigungsschrauben (23) bewirkt.

16. Rotierende elektrische Maschine nach dem vorangehenden Anspruch, **dadurch gekennzeichnet, dass** die Befestigungsschraube (23) in einer Gewindebohrung eingesetzt ist, die in den einstückigen Erhebungsbereich (12) eingearbeitet ist.

17. Rotierende elektrische Maschine nach Anspruch 15 oder 16, **dadurch gekennzeichnet, dass** die Achse der Befestigungsschraube (23) mit der Umfangsfläche der Tangente an der einstückigen Erhebungsfläche (12) auf der Seite gegenüber der anderen seitlichen Auflagefläche (14) einen Winkel kleiner als 90° bildet.

18. Rotierende elektrische Maschine nach Anspruch 14 oder 15, **dadurch gekennzeichnet, dass** die Flanschvorrichtung (22) die allgemeine Form eines L aufweist, von dem ein Schenkel das vorgenannte Keilelement (28) bildet, während der andere Schenkel auf dem Erhebungsbereich (12) des Umfangs des Lagerschilds zur Auflage kommt.

19. Rotierende elektrische Maschine nach Anspruch 14 oder 15, **dadurch gekennzeichnet, dass** die Flanschvorrichtung (22) ein Element, das einen separaten Keil (30) bildet, und eine Klemmplatte (31) umfasst, die beim Anziehen der Befestigungsschraube (23) auf dem Erhebungsbereich (12) und dem einen Keil bildenden Element (30) zur Auflage kommt, um besagtes Element in den Zwischenraum (27) zu drücken.

20. Rotierende elektrische Maschine nach Anspruch 14 oder 15, **dadurch gekennzeichnet, dass** die Flanschvorrichtung (22) ein einen Keil bildendes Element mit Trapezform (32) und eine Klemmplatte (35) umfasst, die auf der Basis (17) des abnehmbaren Ansatzes (16) und dem Erhebungsbereich (12) zur Auflage kommt, **und dass** der Verkantungseffekt durch eine Klemmschraube erzeugt wird, die durch die Platte und das Keilelement (32) hindurchgeht und beim Anziehen das Keilelement (32) zur Platte hin zieht.

21. Rotierende elektrische Maschine nach Anspruch 14 oder 15, **dadurch gekennzeichnet, dass** die Flanschvorrichtung (22) eine Klemmplatte (39) umfasst, von der ein Teil (40) auf dem Erhebungsbereich (12) zur Auflage kommt, während ein anderer Teil (41) auf einer geneigten Fläche, die eine Rampe (38) bildet, zur Auflage kommt, die so gestaltet ist, dass eine Kraft erzeugt wird, weiche die Basis (17) des Flansches (16) gegen die gegenüberliegende Gleitführungsauflagefläche (14) zurückdrückt, wenn der Plattenteil (48) gegen den Erhebungsbereich (12) geklemmt wird.

22. Rotierende elektrische Maschine nach dem vorangehenden Anspruch, **dadurch gekennzeichnet, dass** die andere seitliche Auflagefläche (14') der Gleitführung einen rechten Winkel mit dem Boden der Gleitführung bildet **und dass** die Seitenfläche der Basis (17) des abnehmbaren Ansatzes (16) die gleiche Aufrichtung wie die besagte andere seitliche Auflagefläche aufweist.

23. Rotierende elektrische Maschine nach Anspruch 2, **dadurch gekennzeichnet, dass** ein abnehmbarer Ansatz (16) in seiner Positionierungsgleitführung durch eine Umschnürungsvorrichtung befestigt ist.

24. Rotierende elektrische Maschine nach einem der Ansprüche 9 bis 13, **dadurch gekennzeichnet, dass** eine Ansatzbasis (17) in der Ebene ihrer Aufnahmegleitführung die allgemeine Form eines U aufweist, so dass sie in ihrem Mitteilteil die Belüftungsöffnungen (9) frei lässt, die in die Umfangswand des Lagerschilds eingearbeitet sind.

25. Rotierende elektrische Maschine nach einem der Ansprüche 9 bis 13, **dadurch gekennzeichnet, dass** eine Ansatzbasis (17) ein Langloch (42) zum Freilegen der in die Umfangswand des Lagerschilds eingearbeiteten Belüftungsöffnungen (9) enthält.

26. Rotierende elektrische Maschine nach einem der Ansprüche 14 bis 22, **dadurch gekennzeichnet, dass** die Teilflächen der Flanschvorrichtung und der Basis des Befestigungsansatzes (17), die sich in Anlage aneinander befinden, gerastet (24, 26) sind, wobei sich die Rastkerben vorteilhafterweise senkrecht zur Achse der Maschine erstrecken, um die axiale Sicherung der abnehmbaren Ansätze (16) zu verbessern.

27. Rotierende elektrische Maschine nach dem vorangehenden Anspruch, **dadurch gekennzeichnet, dass** die Übereinstimmung der Rastkerben der Flanschvorrichtung (22) und der Basis (17) des abnehmbaren Ansatzes (16) durch ein Spiel herbeigeführt wird.

28. Rotierende elektrische Maschine nach dem vorangehenden Anspruch, **dadurch gekennzeichnet, dass** die Übereinstimmung der Rastkerben der Flanschvorrichtung (22) und der Basis (17) des abnehmbaren Ansatzes (16) durch eine längliche Form von Löchern in der Flanschvorrichtung (22) herbeigeführt wird, die es beim Anziehen einer Schraube ermöglichen, die Flanschvorrichtung (22) zu verschieben.

29. Rotierende elektrische Maschine nach einem der Ansprüche 9 bis 13, **dadurch gekennzeichnet, dass** die Fläche (20) zur Anbringung der Basis (17) eines abnehmbaren Ansatzes (16) auf der Umfangfläche des Lagerschilds eine Krümmung aufweist, die der Krümmung der Teilfläche (21) der Lagerschildfläche (5) zwischen den beiden seitlichen Auflageflächen (14) entspricht.

30. Rotierende elektrische Maschine nach einem der vorangehenden Ansprüche, **dadurch gekennzeichnet, dass** der abnehmbare Ansatz (16) aus einem Befestigungsansatz zur Befestigung auf einem ortsfesten Träger, etwa einem fest mit dem Fahrzeugmotor verbundenen Träger, besteht.

31. Rotierende elektrische Maschine nach einem der Ansprüche 1 bis 31, **dadurch gekennzeichnet, dass** der abnehmbare Ansatz (16) aus einem Spannansatz zum Spannen des Riemens besteht.

32. Rotierende elektrische Maschine nach Anspruch 3 in Kombination mit Anspruch 14 oder 15, **dadurch gekennzeichnet, dass** der Winkel der seitlichen Auflagefläche gegenüber der den Flansch tragenden Auflagefläche kleiner als 90° ist und dass der Winkel der seitlichen Auflagefläche, die sich auf der Seite des Flansches befindet, im Wesentlichen 90° beträgt.
